# DEMANDE DE BREVET EUROPEEN

(11) **EP 1 557 341 A1**
(43) Date de publication de la demande: **27.07.2005**
(21) Numéro de dépôt: 04292608.9
(22) Date de dépôt: 03.11.2004
(51) Int. Cl.: B62D 25/12, B60R 21/34

(54) **Système de retenue du capot d'un véhicule automobile**

(30) Priorité: 23.01.2004 FR 0400668; 26.05.2004 FR 0405689
(71) Demandeur: Oxford Automotive Mecanismes et Decoupage Fin, 78997 Elancourt Cedex (FR)
(72) Inventeur: Nozelos, Dinis, 92400 Courbevoie (FR); Guillerot, Thierry, 78370 Plaisir (FR); Peron, Olivier, 78990 Elancourt (FR)
(74) Mandataire: Neyret, Daniel

(57) **Abrégé**

Système de retenue du capot d'un véhicule automobile, caractérisé en ce qu'il comporte :
- un axe d'articulation (2) du capot ;
- un boîtier (3) de verrouillage/déverrouillage du capot logeant une cale de verrouillage dont une partie émerge à l'extérieur du boîtier (3) lorsque la cale est poussée par un élément de poussée, et un logement (10) ménagé sur la face inférieure du boîtier (3) face à la partie émergente de la cale ;
- un axe de retenue (12) du capot pouvant se loger dans ledit second logement (10) et être verrouillé dans ledit logement (10) par la cale sous l'effet de l'élément de poussée ;
- un dispositif de commande de l'élément de poussée susceptible de le faire cesser de pousser la cale ;
- et des moyens de détection d'un choc imminent ou effectif contre le véhicule qui activent ledit dispositif de commande lors d'une telle détection.

## Description

L'invention concerne le domaine des systèmes de retenue du capot de véhicules automobiles,

Un souci de plus en plus présent chez les constructeurs automobiles est de prévoir sur leurs véhicules des systèmes ayant pour fonction de limiter les blessures infligées à un piéton lors d'un choc frontal. A cet effet, l'un des éléments sur lesquels on peut agir est le mécanisme qui maintient le capot en place sur la carrosserie du véhicule. Il est préférable que, lors d'un choc avec un piéton, ce mécanisme se désengage d'une manière qui autorise l'élévation du capot.

On peut, à cet effet, imaginer des systèmes dits « actifs » qui, lors d'un choc, font monter le capot, avant que celui-ci ne puisse s'affaisser.

Les systèmes connus utilisant ce principe sont, cependant, encombrants et complexes. Ils ont, de plus, l'inconvénient de ne pas être réarmables très rapidement et facilement après un déclenchement non justifié (par exemple lorsque ce déclenchement s'est produit après la détection anticipée d'un choc qui, en définitive, n'a pas eu lieu ou n'a eu que des conséquences qui n'ont pas rendu le capot inutilisable).

Le but de l'invention est de proposer un système de retenue de capot du type actif, se déclenchant en cas de choc avec un piéton, qui soit simple de conception et peu encombrant. De préférence, ce système devrait être rapidement réarmable.

A cet effet, l'invention a pour objet un système de retenue du capot d'un véhicule automobile, caractérisé en ce qu'il comporte :
- un axe d'articulation du capot ;
- un boîtier de verrouillage/déverrouillage du capot logeant une cale de verrouillage dont une partie émerge à l'extérieur du boîtier lorsque la cale est poussée par un élément de poussée, et un logement ménagé sur la face inférieure du boîtier face à la partie émergente de la cale ;
- un axe de retenue du capot pouvant se loger dans ledit logement et être verrouillé dans ledit logement par la cale sous l'effet de l'élément de poussée ;
- un dispositif de commande de l'élément de poussée susceptible de le faire cesser de pousser la cale ;
- et des moyens de détection d'un choc imminent ou effectif contre le véhicule qui activent ledit dispositif de commande lors d'une telle détection.

Ledit élément de poussée peut être un piston pouvant coulisser dans un logement, la paroi latérale dudit logement comportant une perforation logeant ladite cale, et ledit dispositif de commande provoque le coulissement du piston dans ledit logement.

Le dispositif de commande peut alors être un dispositif à percussion comportant une pièce susceptible de venir percuter l'extrémité inférieure du piston.

Le piston peut comporter une échancrure dont la paroi oblique pousse la cale de verrouillage lorsque le système est verrouillé.

Ledit dispositif à percussion peut comporter une ventouse magnétique fixée à la carrosserie du véhicule, pouvant être alimentée par un courant électrique et maintenant contre elle ladite pièce, en l'absence d'alimentation électrique et un ressort actionnant la pièce lorsque l'alimentation électrique de la ventouse magnétique est activée.

Ledit dispositif à percussion peut être un dispositif pyrotechnique.

Ledit dispositif de commande du coulissement du piston peut être un dispositif pyrotechnique.

Le système peut alors comporter un ressort dans le premier logement, ledit ressort tendant à ramener la tête du piston dans une position où elle peut pousser la cale de verrouillage, après l'explosion du dispositif pyrotechnique.

Ledit élément de poussée peut être un levier pouvant tourner autour d'un axe, une première extrémité dudit levier exerçant une pression sur la cale lorsque le capot est verrouillé, et ledit dispositif de commande agit sur la deuxième extrémité dudit levier lors du déverrouillage du capot.

Ledit dispositif de commande peut alors être un dispositif à percussion comportant une pièce susceptible de venir percuter la deuxième extrémité du levier.

Ledit dispositif à percussion peut comporter une ventouse magnétique fixée à la carrosserie du véhicule, pouvant être alimentée par un courant électrique et maintenant contre elle ladite pièce en l'absence d'alimentation électrique, et un ressort actionnant la pièce lorsque l'alimentation électrique de la ventouse magnétique est activée.

Ledit dispositif à percussion peut être un dispositif pyrotechnique.

Ladite pièce peut se déplacer selon une trajectoire horizontale.

Le boîtier peut être fixé au capot ou à son support, et l'axe de retenue est fixé à la carrosserie du véhicule.

Le boîtier peut être fixé à la carrosserie du véhicule, et l'axe de retenue est fixé au capot ou à son support.

L'axe de retenue et l'axe d'articulation du capot peuvent être confondus.

Ladite cale de verrouillage peut être une bille.

Ladite cale de verrouillage peut être un galet.

Ladite cale de verrouillage peut être une came.

Le système peut comporter des moyens de liaison pour limiter l'ampleur de l'éloignement du capot par rapport à la carrosserie du véhicule après le déverrouillage du système de retenue.

Lesdits moyens de liaison peuvent être constitués par deux biellettes articulées l'une sur l'autre, sur le capot ou son support et sur la carrosserie du véhicule.

Lesdits moyens de liaison peuvent être constitués par deux biellettes articulées l'une sur l'autre et intégrées à l'articulation du capot.

Comme on l'aura compris, l'invention repose notamment sur l'utilisation d'un boîtier de retenue emprisonnant l'axe de retenue du capot et le rendant fixe par rapport à la carrosserie, grâce à une cale qui exerce une pression sur l'axe. La détection de l'imminence ou de la survenue d'un choc déclenche l'actionnement d'un dispositif qui permet à la cale de s'escamoter. L'axe de retenue peut alors être libéré de son logement et se dégager hors du boîtier de retenue, et le capot peut alors se soulever. De préférence, le dispositif d'actionnement comporte une ventouse magnétique, dont le temps de réaction est extrêmement court. Un dispositif pyrotechnique peut également être utilisé.

L'invention sera mieux comprise à la lecture de la description qui suit, donnée en référence aux figures annexées suivantes :
- la figure 1 qui montre schématiquement, vu de profil et en coupe, l'ensemble d'un exemple de système de retenue d'articulation de capot de véhicule selon l'invention, en position verrouillée ;
- la figure 2 qui montre le boîtier de déverrouillage de ce système, en position verrouillée (figure 2a) et au moment du déverrouillage (figure 2b) ;
- la figure 3 qui montre le système en position déverrouillée ;
- la figure 4 qui montre une variante du boîtier de déverrouillage en position verrouillée (figure 4a) et en position déverrouillée (figure 4b) ;
- la figure 5 qui montre une variante du dispositif de la figure 4, en position verrouillée (figure 5a) et en position déverrouillée (figure 5b) ;
- la figure 6 qui montre une variante du dispositif selon l'invention, avec le boîtier de déverrouillage en position verrouillée ;
- la figure 7 qui montre cette même variante avec le boîtier de déverrouillage en position déverrouillée.

Le système de retenue pour articulation de capot de véhicule selon l'invention est implanté, par exemple, dans la région du véhicule située à proximité de l'habitacle, de façon à autoriser, lors du choc d'un piéton, ou préalablement à un tel choc, un soulèvement du bord du capot qui longe l'habitacle. Mais tout autre emplacement où le système pourrait remplir sa fonction serait possible.

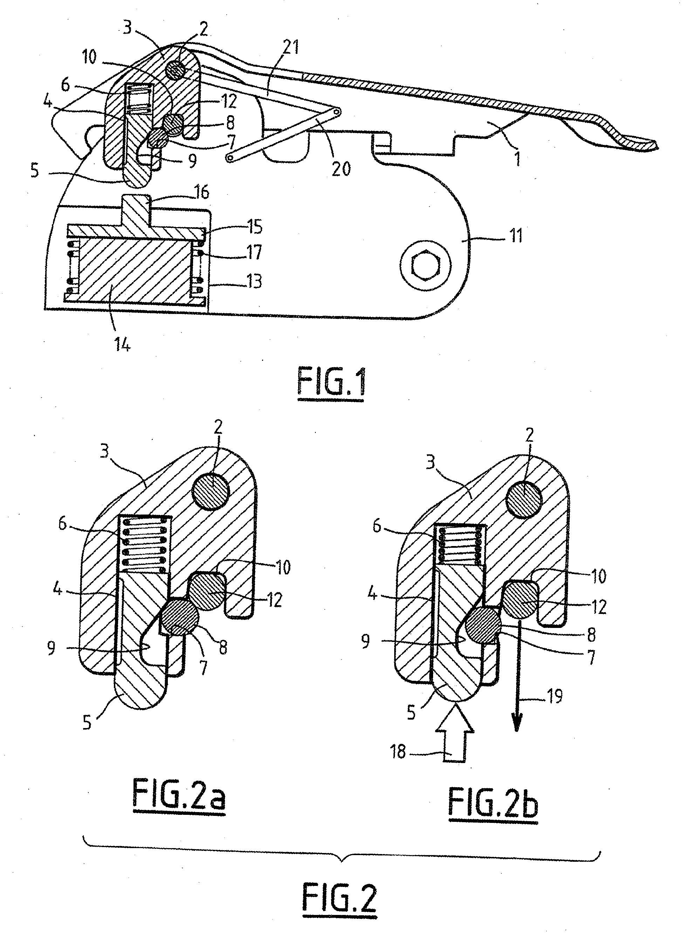

Dans la variante de l'invention représentée sur les figures 1 à 3, le support 1 du capot du véhicule porte l'axe d'articulation 2 autour duquel s'effectuent l'ouverture et la fermeture du capot dans son utilisation normale. Ce support 1 est lui-même solidaire du capot, ou lui est intégré de construction. Il doit être entendu que dans la suite de la description, le terme « support 1 du capot » devra être compris comme incluant le capot lui-même si ces deux éléments sont intégrés. L'axe d'articulation 2 traverse un boîtier 3 de verrouillage/déverrouillage qui, dans l'exemple représenté, est donc solidaire du support 1 du capot.

Ce boîtier 3 comporte un premier logement 4 débouchant sur sa partie inférieure, à l'intérieur duquel peut coulisser un piston 5 sous l'action d'un ressort 6 qui tend à expulser le piston 5 hors du boîtier 3. La paroi latérale du premier logement 4 comporte une perforation 7 dans laquelle est logée une bille de verrouillage 8. Leurs géométries sont telles que la bille 8 ne peut sortir entièrement du logement 4. Une partie de la bille 8 peut émerger à l'extérieur du boîtier 3 lorsque la bille 8 est poussée par la paroi oblique d'une échancrure 9 ménagée dans le piston 5, lorsque le ressort 6 est en extension. La bille 8 peut être remplacée par un galet de même diamètre, ou, de manière générale, par une pièce de toute forme adaptée à former une cale de verrouillage fonctionnant comme indiqué.

Face à la partie émergente de la bille 8, un second logement 10 est ménagé sur la face inférieure du boîtier 3. Sa fonction sera vue plus loin.

Un support fixe 11 est solidaire de la carrosserie du véhicule. Il est traversé par un axe de retenue 12 du capot.

Le support fixe 11 comporte également un logement 13 dans lequel est installée une ventouse magnétique 14 qui, lorsqu'elle est n'est pas traversée par un courant électrique, maintient contre elle une pièce 15 portant une excroissance 16. La ventouse magnétique 14 contrecarre l'action d'un ressort de précontrainte 17 dont les efforts tendent à soulever la pièce 15 à la verticale.

Les dispositions relatives et les dimensions des pièces qui ont été décrites sont telles que, lorsque le capot est en position normale et verrouillée (figures 1 et 2a) :
- l'axe de retenue 12 est placé dans le second logement 10 ménagé sur la face inférieure du boîtier 3, et il y est verrouillé par la pression qu'exerce sur lui la portion de la bille 8 qui émerge du boîtier 3 ;
- et l'excroissance 16 de la pièce 15 maintenue contre la ventouse magnétique 14 se trouve juste en dessous du piston 5.

La géométrie du piston 5 est étudiée de manière à lui permettre d'absorber les dispersions dans les dimensions et le placement des différentes pièces (axe de retenue 12, boîtier 3, bille 8) pour assurer un verrouillage sans jeu.

Dans l'exemple représenté, l'extrémité inférieure du piston 5 fait saillie hors du boîtier 3, mais ce n'est pas obligatoire. L'essentiel est que cette extrémité puisse être percutée par la pièce 15 lorsque celle-ci est poussée par le ressort 17.

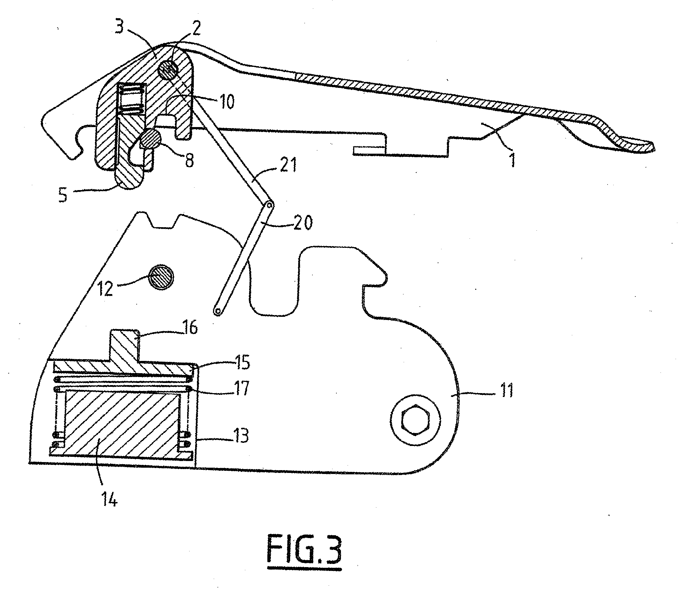

Lorsque le véhicule heurte (ou est sur le point de heurter) un obstacle, des moyens de détection du choc (ou des moyens de détection de l'obstacle), connus en eux-mêmes, activent la circulation du courant dans la ventouse magnétique 14 qui perd alors ses propriétés magnétiques. Le ressort de précontrainte 17 peut alors instantanément pousser vers le haut la pièce 15 avec une force F selon la flèche 18, et l'excroissance 16 de la pièce 15 vient percuter le piston 5 avec une énergie suffisante pour faire remonter le piston 5 dans le premier logement 4 en comprimant le ressort 6. Le dispositif se retrouve alors dans la position de la figure 2b. Du fait de l'oblicité de la paroi de l'échancrure 9, la bille 8 a une possibilité de retrait vers l'intérieur du boîtier 3. Elle ne bloque donc plus l'axe de retenue 12, qui peut quitter librement le second logement 10 selon la flèche 19. Le boîtier 3 et le support 1 du capot dont il est solidaire peuvent ainsi monter avant que le capot ne s'affaisse sous l'effet du choc. On se retrouve finalement dans la position de la figure 3.

De préférence, comme représenté sur la figure 3, le support 1 du capot et le support fixe 11 (ou la carrosserie) sont reliés l'un à l'autre par deux biellettes 20, 21 articulées l'une sur l'autre, l'une étant fixée sur le support 1 du capot (par exemple, comme représenté, sur l'axe d'articulation 2) et l'autre étant fixée sur le support fixe 11. De cette façon, on limite l'ampleur de l'éloignement du capot par rapport à la carrosserie après le déverrouillage du système de retenue. D'autres moyens de liaison que des biellettes pourraient être envisagés à cet effet. Les biellettes pourraient aussi être intégrées à l'articulation du capot.

On a décrit et représenté le cas où le boîtier 3 est fixé sur le support 1 du capot. Mais avec des adaptations évidentes pour l'homme du métier, il est possible de fixer le boîtier 3 sur le support fixe 11. Dans ce cas, l'axe de retenue 12 est porté par le support 1 du capot, et son rôle peut être joué par l'axe d'articulation 2 lui-même.

La ventouse magnétique 14 associée à la pièce 15 et au ressort 17 constitue un exemple préféré de dispositif de percussion du piston 5. Il doit être entendu que l'utilisation d'un autre type de dispositif de percussion serait possible, par exemple d'un dispositif pyrotechnique.

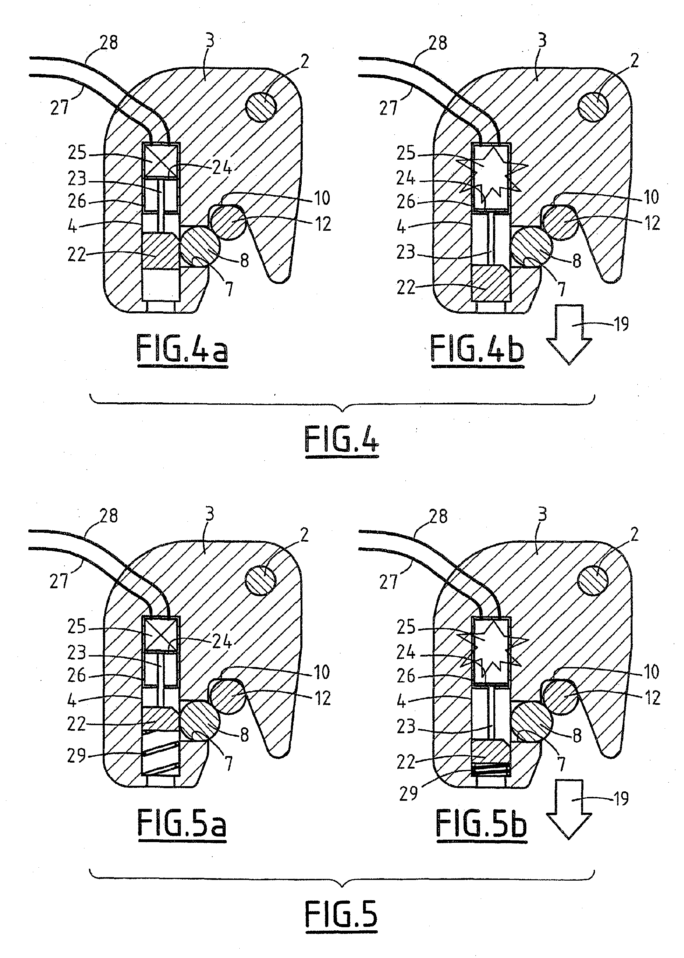

Dans la variante de l'invention représentée sur la figure 4, le système de retenue ne renferme plus qu'un seul élément, en l'occurrence le boîtier 3. Tous les organes assurant le déverrouillage du système sont inclus dans le boîtier 3, ce qui procure un gain de place supplémentaire par rapport à la variante précédente (les parties communes à la variante des figures 1 à 3 et à celle de la figure 4 sont désignées par les mêmes références).

Ici, le piston est formé d'une tête 22, d'une tige 23 et d'une rondelle 24. Une charge pyrotechnique 25 est placée dans le fond d'un carter 26, placé lui-même dans la partie supérieure du logement 4 du piston. Lorsque le système est à l'état verrouillé (fig.4a) et que la charge 25 est intacte, la rondelle 24 est solidaire de la charge 25, la tige 23 traverse le carter 26 et la tête 22 du piston se trouve face à la bille de verrouillage 8, qu'il pousse en direction de l'axe de retenue 12 du capot.

Lorsque le véhicule heurte, ou est sur le point de heurter un obstacle, les moyens de détection du choc ou de l'obstacle déclenchent l'explosion de la charge pyrotechnique 25 en y envoyant un courant électrique par un système de mise à feu incluant des fils électriques 27, 28. Le piston (22-24) se retrouve alors dans une position (figure 4b) où la tête 22 s'est déplacée vers le bas sous l'effet de l'explosion et ne pousse plus la bille 8. Cela permet le déblocage de l'axe de retenue du capot 12, qui peut quitter son logement 10.

Dans cette variante, après l'explosion de la charge 25, le piston (22-24) se retrouve libre à l'intérieur du logement 4. Il ne peut donc plus jouer aucun rôle dans le verrouillage du système. Un réarmement du système n'est donc pas possible sans avoir au préalable changé la charge 25, voire l'ensemble qu'elle formait à l'origine avec le piston (22-24) et leur carter 26.

Toutefois, il est possible de réaliser un réarmement du système si on le modifie comme indiqué sur la figure 5. Dans cette variante, un ressort 29 est installé dans la partie inférieure du logement 4 du piston (22-24), et tend à pousser la tête 22 du piston (22-24) vers le haut. Lors de l'explosion de la charge 25, l'énergie dégagée est suffisante pour que le piston (22-24) puisse comprimer le ressort 29 et se retrouver dans la position de la figure 5b où la bille 8 peut être libérée. Après cela, le ressort 29 se détend pour ramener le piston (22-24) à sa position initiale, ou à une position proche de celle-ci où la tête 22 est à nouveau en mesure de pousser la bille 8 vers l'axe de retenue 12.

La forme qu'on a donnée au piston (22-24) dans les variantes des figures 4 et 5 pourrait aussi être utilisée dans la variante précédente des figures 1 à 3.

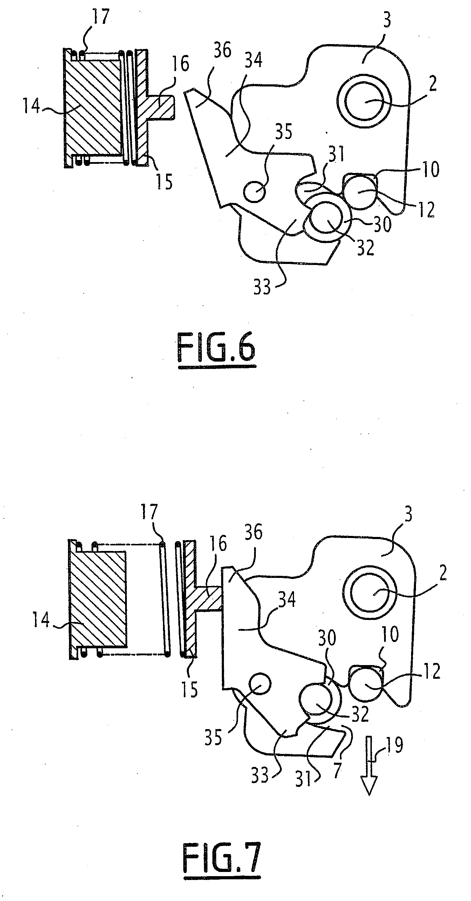

Une autre variante de l'invention, représentée sur les figures 6 et 7, est particulièrement avantageuse à utiliser lorsqu'on ne dispose que de peu de place dans le sens vertical pour loger le dispositif, mais qu'on a une plus grande latitude pour ce faire dans le sens horizontal.

Dans cette variante, on retrouve, comme dans celle des figures 1 à 3 et repérés par les mêmes références, un boîtier 3 traversé par l'axe d'articulation 2 du capot. Un second logement 10 ménagé sur la face inférieure du boîtier 3 reçoit l'axe de retenue 12 du capot lorsque le dispositif est verrouillé. Ce verrouillage est effectué grâce à un galet 30 (ou un autre type de cale de verrouillage) placé dans un premier logement 31 du boîtier 3 pour exercer une pression sur l'axe de retenue 12 de manière à le verrouiller dans le second logement 10.

Cette émergence est réalisée grâce à la pression qu'exerce sur un téton 32, solidaire du galet 30, une première extrémité 33 d'un levier de verrouillage/déverrouillage 34, articulé autour d'un axe 35. Des moyens élastiques (non représentés) tels qu'un ressort tendent à faire tourner le levier 34 pour appliquer sa première extrémité 33 contre le téton 32. Le levier 33 joue donc le même rôle que le piston 5 de la variante des figures 1 à 3.

Le dispositif comprend également une ventouse magnétique 14 maintenant contre elle une pièce 15 portant une excroissance 16 et contrecarrant l'effort d'un ressort de précontrainte 17 dont les efforts tendent à pousser horizontalement la pièce 15 en direction d'une deuxième extrémité 36 du levier 34, située à l'opposé de la première extrémité 33 qui agit sur le téton 32 du galet 30.

La forme de la première extrémité 33 du levier 34 est étudiée de manière à lui permettre d'absorber les dispersions dans les dimensions et le placement des différentes pièces (axe de retenue 12, boîtier 3, galet 30) pour assurer un verrouillage sans jeu. On peut lui conférer la forme d'une came.

Lorsqu'un choc du véhicule contre un obstacle se produit (ou est sur le point de se produire), la circulation d'un courant électrique dans la ventouse magnétique 14 lui fait perdre ses propriétés magnétiques. Le ressort 17 peut alors pousser la pièce 15 et son excroissance 16 contre la deuxième extrémité 36 du levier 34. Des moyens de guidage (non représentés) dirigent à cet effet la pièce 15. L'action des moyens élastiques faisant tourner le levier 34 est alors contrecarrée, et le levier 34 tourne autour de l'axe 35 de manière à ne plus pousser le téton 32 du galet 30.

Celui-ci n'exerce plus de pression sur l'axe de retenue 12 du capot, qui peut alors quitter son logement selon la flèche 19 (figure 7).

Le boîtier 3 et le capot dont il est solidaire peuvent alors monter avant que le capot ne s'affaisse sous l'effet du choc.

Comme dans la variante des figures 1 à 3, le dispositif à ventouse magnétique 14 peut être remplacé par un autre type de dispositif à percussion, tel qu'un dispositif pyrotechnique. Un dispositif limitant l'éloignement du capot par rapport à la carrosserie après le déverrouillage, comme les biellettes 20, 21 des figures 1 et 3, est également utilisable.

Il va de soi que le piston 5, 22, 23, 24 et le levier 34 des différentes variantes pourraient être remplacés par tout autre type d'élément de poussée agissant de manière similaire sur la cale de déverrouillage.

Parmi les avantages de l'invention, on peut citer :
- la simplicité de sa conception et son faible encombrement (particulièrement pour les variantes des figures 4 et 5), qui rendent souvent possible son adaptation à un véhicule qui n'était pas initialement conçu pour la recevoir ;
- la rapidité de sa réaction à la détection de la survenue ou de l'imminence d'un choc : le temps de réaction de la ventouse magnétique est de l'ordre de 10 à 15ms, bien inférieur à celui d'un moteur électrique qui piloterait l'éloignement du capot et de son support ; le dispositif pyrotechnique a même un temps de réaction encore plus court ;
- le fait que, pour les variantes du type représenté sur les figures 1 à 3 et 5 à 7, la partie mécanique du système soit aisément réarmable après un éventuel déclenchement intempestif, par un simple réalignement de ses organes et l'exercice d'une pression sur le capot ; si une ventouse magnétique est utilisée, le dispositif est ensuite entièrement opérationnel ; si on utilise un système pyrotechnique, le dispositif ne redeviendra pleinement opérationnel qu'après le changement de la cartouche de matériau explosif, mais avant ce changement le capot sera maintenu dans sa position normale ;
- par rapport à un système pyrotechnique, la sécurité de manipulation et l'absence de perte de fiabilité de la ventouse magnétique au cours du temps puisqu'il n'y a pas de composé explosif et sujet au vieillissement devant être remplacé périodiquement ;
- le fait que le système puisse être déverrouillé sous contrainte avec une faible énergie ; par ailleurs, le système assure un maintien suffisant en verrouillage pour répondre aux exigences des cahiers des charges en vigueur pour des articulations de capot (soit de l'ordre de 400 daN dans le cadre d'une utilisation pour un véhicule léger de conception courante).

## Revendications

1. Système de retenue du capot d'un véhicule automobile, **caractérisé en ce qu'**il comporte :
- un axe d'articulation (2) du capot ;
- un boîtier (3) de verrouillage/déverrouillage du capot logeant une cale de verrouillage dont une partie émerge à l'extérieur du boîtier (3) lorsque la cale est poussée par un élément de poussée, et un logement (10) ménagé sur la face inférieure du boîtier (3) face à la partie émergente de la cale ;
- un axe de retenue (12) du capot pouvant se loger dans ledit logement (10) et être verrouillé dans ledit logement (10) par la cale sous l'effet de l'élément de poussée ;
- un dispositif de commande de l'élément de poussée susceptible de le faire cesser de pousser la cale ;
- et des moyens de détection d'un choc imminent ou effectif contre le véhicule qui activent ledit dispositif de commande lors d'une telle détection.

2. Système de retenue selon la revendication 1, **caractérisé en ce que** ledit élément de poussée est un piston (5 ; 22, 23 , 24) pouvant coulisser dans un logement (4), la paroi latérale dudit logement (4) dudit piston (5 ; 22, 23, 24) comportant une perforation (7) logeant ladite cale, et **en ce que** ledit dispositif de commande provoque le coulissement du piston (5 ; 22, 23, 24) dans ledit logement (4).

3. Système de retenue selon la revendication 2, **caractérisé en ce que** le dispositif de commande est un dispositif à percussion comportant une pièce (15) susceptible de venir percuter l'extrémité inférieure du piston (5).

4. Système de retenue selon la revendication 3, **caractérisé en ce que** le piston (5) comporte une échancrure (9) dont la paroi oblique pousse la cale de verrouillage lorsque le système est verrouillé.

5. Système de retenue selon la revendication 3 ou 4, **caractérisé en ce que** ledit dispositif à percussion comporte une ventouse magnétique (14) fixée à la carrosserie du véhicule, pouvant être alimentée par un courant électrique et maintenant contre elle ladite pièce (15) en l'absence d'alimentation électrique, et un ressort (17) actionnant la pièce (15) lorsque l'alimentation électrique de la ventouse magnétique (14) est activée.

6. Système de retenue selon l'une des revendications 2 à 4, **caractérisé en ce que** ledit dispositif à percussion est un dispositif pyrotechnique.

7. Système de retenue selon la revendication 2, **caractérisé en ce que** ledit dispositif de commande du coulissement du piston (22, 23, 24) est un dispositif pyrotechnique (25).

8. Système de retenue selon la revendication 7, **caractérisé en ce qu'**il comporte un ressort (29) dans le premier logement (4), ledit ressort (29) tendant à ramener la tête (22) du piston (22, 23, 24) dans une position où elle peut pousser la cale de verrouillage, après l'explosion du dispositif pyrotechnique (25).

9. Système de retenue selon la revendication 1, **caractérisé en ce que** ledit élément de poussée est un levier (34) pouvant tourner autour d'un axe (35), une première extrémité (33) dudit levier (34) exerçant une pression sur la cale lorsque le capot est verrouillé, et **en ce que** ledit dispositif de commande agit sur la deuxième extrémité (36) dudit levier (34) lors du déverrouillage du capot.

10. Système de retenue selon la revendication 9, **caractérisé en ce que** ledit dispositif de commande est un dispositif à percussion comportant une pièce (15) susceptible de venir percuter la deuxième extrémité (36) du levier (34).

11. Système de retenue selon la revendication 10, **caractérisé en ce que** ledit dispositif à percussion comporte une ventouse magnétique (14) fixée à la carrosserie du véhicule, pouvant être alimentée par un courant électrique et maintenant contre elle, en l'absence d'alimentation électrique, ladite pièce (15), et un ressort (17) actionnant la pièce (15) lorsque l'alimentation électrique de la ventouse magnétique (14) est activée.

12. Système de retenue selon la revendication 10, **caractérisé en ce que** ledit dispositif à percussion est un dispositif pyrotechnique.

13. Système de retenue selon l'une des revendications 10 à 12, **caractérisé en ce** ladite pièce (15) se déplace selon une trajectoire horizontale.

14. Système de retenue selon l'une des revendications 1 à 13, **caractérisé en ce que** le boîtier (3) est fixé au capot ou à son support (1), et **en ce que** l'axe de retenue (12) est fixé à la carrosserie du véhicule.

15. Système de retenue selon l'une des revendications 1 à 13, **caractérisé en ce que** le boîtier (3) est fixé à la carrosserie du véhicule, et **en ce que** l'axe de retenue (12) est fixé au capot ou à son support (1).

16. Système de retenue selon la revendication 15, **caractérisé en ce que** l'axe de retenue (12) et l'axe d'articulation (2) du capot sont confondus.

17. Système de retenue selon l'une des revendications 1 à 16, **caractérisé en ce que** ladite cale de verrouillage est une bille (8).

18. Système de retenue selon l'une des revendications 1 à 16, **caractérisé en ce que** ladite cale de verrouillage est un galet (30).

19. Système de retenue selon l'une des revendications 1 à 16, **caractérisé en ce que** ladite cale de verrouillage est une came.

20. Système de retenue selon l'une des revendications 1 à 19, **caractérisé en ce qu'**il comporte des moyens de liaison pour limiter l'ampleur de l'éloignement du capot par rapport à la carrosserie du véhicule après le déverrouillage du système de retenue.

21. Système de retenue selon la revendication 20, **caractérisé en ce que** lesdits moyens de liaison sont constitués par deux biellettes (20, 21) articulées l'une sur l'autre, sur le capot ou son support (1) et sur la carrosserie du véhicule.

22. Système de retenue selon la revendication 20, **caractérisé en ce que** lesdits moyens de liaison sont constitués par deux biellettes articulées l'une sur l'autre et intégrées à l'articulation du capot.
